# EUROPÄISCHE PATENTSCHRIFT

(11) **EP 3 574 370 B1**
(45) Veröffentlichungstag und Bekanntmachung des Hinweises auf die Patenterteilung: **17.06.2020**
(21) Anmeldenummer: 18703242.0
(22) Anmeldetag: 24.01.2018
(51) Int. Cl.: G02C 13/00

(54) **COMPUTERIMPLEMENTIERTES VERFAHREN ZUR BESTIMMUNG EINER REPRÄSENTATION EINES BRILLENFASSUNGSRANDS ODER EINER REPRÄSENTATION DER RÄNDER DER GLÄSER EINER BRILLE**
COMPUTER-IMPLEMENTED METHOD FOR DETERMINING A REPRESENTATION OF A SPECTACLE SOCKET RIM OR A REPRESENTATION OF THE EDGES OF THE GLASSES OF A PAIR OF SPECTACLES
PROCÉDÉ ASSISTÉ PAR ORDINATEUR DESTINÉ À DÉTERMINER UNE REPRÉSENTATION D'UN BORD DE MONTURE DE LUNETTE OU D'UNE REPRÉSENTATION DES BORDS DE VERRES DE LUNETTES

(30) Priorität: 27.01.2017 EP 17153557
(43) Veröffentlichungstag der Anmeldung: 04.12.2019
(73) Patentinhaber: Carl Zeiss Vision International GmbH, 73430 Aalen (DE); Carl Zeiss AG, 73447 Oberkochen (DE)
(72) Erfinder: NIEUWENHUIS, Claudia, 73431 Aalen (DE); WOJEK, Christian, 73434 Aalen (DE); SCHWARZ, Oliver, 73479 Ellwangen (DE)
(74) Vertreter: Patentanwälte Bregenzer und Reule Partnerschaftsgesellschaft mbB
(86) Internationale Anmeldenummer: PCT/EP2018/051729
(87) Internationale Veröffentlichungsnummer: WO 2018/138149

(56) Entgegenhaltungen:
- DE-B4-102011 115 239
- US-A1- 2003 081 173
- US-A1- 2015 304 530

## Beschreibung

Die Erfindung betrifft ein computerimplementiertes Verfahren zur Bestimmung einer Repräsentation eines Brillenfassungsrands oder einer Repräsentation der Ränder der Gläser einer Brille gemäß Oberbegriff des Anspruchs 1.

Es sind Verfahren bekannt, die für einen gegebenen Tracer-Datensatz die zugehörigen Konturen in Bildaufnahmen finden. Dabei werden bildbasierte Verfahren wie Mustersuche oder Template Matching verwendet. Es wird exemplarisch auf die Offenbarung der DE 10 2011 115 239 B4 verwiesen.

Nachteil dieser Lösung ist, dass der Tracer-Datensatz und damit die aufgesetzte Brille bekannt sein muss, um die Konturen in den aufgenommenen Bildern zu finden. Der typische Workflow beim Optiker ist aber, dass erst Tracer-Daten von einer Fassung erzeugt werden, wenn der Kunde die Brille schon zum Kauf ausgewählt hat. Das heißt, dass diese Daten nicht für alle Brillen im Geschäft vorliegen, wenn der Kunde sich im Laden aufhält. Das Bestimmen der Tracerdaten wird meist auch erst am Abend durchgeführt, wenn der Kunde schon den Laden verlassen hat, damit er nicht darauf warten muss. Beim Stand der Technik müssten also erst Tracer-Daten erzeugt werden, bevor die Zentrierung durchgeführt werden kann, was den Workflow des Optikers ändern würde und den Kunden Zeit kostet. Zusätzlich ist es auch umständlich, wenn jeder Optiker zu jeder Fassung den Tracer-Datensatz vorrätig haben muss. Diese Daten liegen meist auch nur zweidimensional vor, werden aber meist dreidimensional benötigt. Es ist daher Aufgabe der Erfindung, ein Verfahren der eingangs genannten Art derart weiterzubilden, dass es vielseitiger anwendbar ist.

Diese Aufgabe wird erfindungsgemäß durch ein computerimplementiertes Verfahren mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, den Fassungsrand einer Brille auf dem Kopf eines Probanden, der in mindestens zwei zueinander kalibrierten Aufnahmen aufgenommen wurde, basierend auf einem parametrischen dreidimensionalen Brillenmodell in mehreren Ansichten vollautomatisch und gleichzeitig zu detektieren. Aus diesen Informationen können danach Zentrierparameter berechnet werden. Dabei werden zueinander kalibrierte Bilder bereitgestellt. Deren Kalibrierung umfasst die extrinsischen Eigenschaften der die Bilder aufnehmenden Kameras oder der die Bilder nacheinander aufnehmenden Kamera wie die relative Ausrichtung ihrer optischen Achsen sowie die relative Anordnung zueinander im Raum, sowie ihre intrinsischen Eigenschaften, also die Eigenschaften der Kameras selbst, die definieren, wie ein Punkt im Raum, der sich im internen Koordinatensystem der jeweiligen Kamera befindet, auf die Koordinaten der Pixel des aufgenommenen Bildes abgebildet wird. Eine ausführliche Beschreibung der Kalibrierung von Kameras findet sich im Lehrbuch "Multiple View Geometry in Computer Vision" von Richard Hartley und Andrew Zisserman, 2. Auflage, Cambridge University Press 2004, und dort insbesondere auf Seite 8. Aufgrund der Kalibrierung der Bilder kann auf einen Messbügel, wie er beim Verfahren gemäß DE 10 2011 115 239 B4 verwendet wird, verzichtet werden. Zudem wird ein dreidimensionales Modell der Brillenfassung oder Brille bereitgestellt, das auf geometrischen Parametern beruht, die die Form der Brillenfassung oder Brille definieren. Diese geometrischen Parameter werden zur Anpassung des Modells an die detektierten Ränder optimiert. Eine Änderung der Parameter führt zu einer Änderung der Form der Brillenfassung oder Brille.

Zudem ist es möglich, weitere geometrische Parameter zu optimieren, beispielsweise solche, die die Orientierung der Brillenfassung oder Brille im Raum definieren.Die Repräsentation des Brillenfassungsrands bzw. die Repräsentation der Ränder der Gläser der Brille wird in der Regel zur Bestimmung von Zentrierparametern benutzt. Zentrierparameter werden benutzt, um Brillengläser korrekt in einer Brillenfassung anzuordnen bzw. zu zentrieren, so dass die Brillengläser in korrekter Position relativ zu den Augen der die Brille tragenden Person angeordnet sind. Dabei handelt es sich zum Teil um anatomische Parameter der betreffenden Person, wie beispielsweise den Pupillenabstand, zum Teil um rein fassungsspezifische Parameter wie die Fassungsscheibenbreite oder die Fassungsscheibenhöhe und zum Teil um Kombinationen aus anatomischen und fassungsspezifischen Parametern, wie beispielsweise den Hornhautscheitelabstand und die Durchblickshöhe. Einen Überblick über die gängigen Zentrierparameter gibt die DIN EN ISO 13666 vom Oktober 2013.

Ausgehend von dieser allgemeinen Idee kann das erfindungsgemäße Verfahren bzw. das verwendete dreidimensionale Modell auf verschiedene Weise vereinfacht werden. So wird bevorzugt, dass die Bilder aus Pixeln bestehen und dass jedes Pixel ein die Wahrscheinlichkeit, dass das Pixel einen Teil der Ränder der Brillenfassung bzw. der Gläser enthält, abbildender Wert zugeordnet wird. Dadurch wird die Detektion der Fassungsränder bzw. der Glasränder vereinfacht.

Eine diese Wahrscheinlichkeiten abbildende Wahrscheinlichkeitskarte kann z.B. mittels Kantendetektoren (Gradientenfilter, Canny Edge Detector, Laplace Operator, Gaborfilter, Machine Learning basierte Kantendetektoren, die aus Beispieldaten gelernt werden) berechnet werden. Alternativ dazu können die Ränder der Brillenfassung bzw. Gläser auch in den einzelnen Bildern detektiert werden, z.B. mittels Hough-Transformation, Template Matching oder verschiedener Verfahren zur Segmentierung des Glasrandes.

Eine mögliche gute Näherung für die Fassungsränder bzw. die Glasränder wird beispielsweise dann erhalten, wenn die geometrischen Parameter für das Modell nasale und/oder temporale Kanten der Brillenfassung bzw. der Gläser näherungsweise definierende Geraden beschreiben. Anhand dieser Geraden lässt sich die Brillenfassung bzw. die Brille in einer ersten Näherung bereits gut definieren. Eine weitere Vereinfachung des Modells sieht vor, dass es jeden Fassungsrand oder jedes Glas näherungsweise als in einer Ebene liegend definiert.

Alternativ können die Gläser auch mittels Flächen höherer Ordnung, z.B. Paraboloiden, approximiert werden, die die echte Glasform genauer beschreiben.

Gemäß einer vorteilhaften Weiterbildung der Erfindung werden aus dem Modell durch Wahl verschiedener Modellparametersätze konkrete Darstellungen der Brillenfassung bzw. der Gläser generiert und auf die aufgenommenen Bilder projiziert. Dabei bilden diese Darstellungen insbesondere markante Bereiche der Brillenfassung bzw. der Gläser ab, wie beispielsweise die Glasränder oder nasale und/oder temporale Kanten. Die Projektion erfolgt zu dem Zweck, die Parameter des Modells so zu optimieren, dass das Modell zu den aufgenommenen Bildern und den daraus generierten Daten, insbesondere den o.a. die Wahrscheinlichkeit abbildenden Werten bzw. den zuvor detektierten Fassungs- bzw. Glasrändern passt.

Die geometrischen Parameter des Modells werden vorzugsweise durch Einsatz einer Kostenfunktion stochastisch oder deterministisch optimiert. Kostenfunktionen wurden im Bereich der Wirtschaftswissenschaften entwickelt, um einen Zusammenhang zwischen Kosten einerseits und Parametern andererseits darstellen zu können. Kostenfunktionen werden auch als sogenannte Zielfunktionen, Energiefunktionen bzw. -funktionale, Verlustfunktionen (loss functions), Nutzenfunktionen (utility functions) oder als Tauglichkeitsfunktionen (fitness functions) bezeichnet.

In den Wirtschaftswissenschaften wird eine Optimierung der Kosten vorgenommen, indem die in die Kostenfunktion einfließenden Parameter variiert werden, bis die Kostenfunktion ein Minimum erreicht. Alternativ kann auch eine Zielfunktion maximiert werden. Dieses Prinzip kann auf die vorliegende Problemstellung übertragen werden, indem beispielsweise die Kostenfunktion die Übereinstimmung der auf die aufgenommenen Bilder projizierten Darstellungen bewertet. In die Kostenfunktion fließen dann die entsprechenden Abweichungen ein. Der durch die Kostenfunktion ermittelte Wert, im folgenden Kostenwert genannt, kann dann optimiert werden.

Je nach Komplexität der Konstenfunktion kommen dabei verschiedene Optimierungsverfahren zum Einsatz. Bei komplexen Kostenfunktionen werden oft stochastische Algorithmen verwendet wie z.B. Markov-Chain-Monte-Carlo-Methoden oder Simulated Annealing Methoden. Bei weniger komplexen Kostenfunktionen werden meist deterministische Optimierungsverfahren verwendet wie z.B. Gradienten-Abstiegsmethoden, Simplex-Verfahren (z.B. Nelder-Mead-Verfahren), Differential Evolution Methoden, primal-dual-Ansätze, graphen-theoretische Methoden oder diskrete Graph-Cut Methoden.

Ein deterministisches Optimierungsverfahren ist im Gegensatz zu einem stochastischen Optimierungsverfahren frei von Zufallseinflüssen und berechnet jedes Mal die gleiche Lösung bei gleichem Startwert.

Zur Vereinfachung der Optimierung können Parameter aus den Bilddaten bestimmt werden und in das Modell einfließen. Beispielsweise kann mittels geometrischer Positionsbestimmung, wobei insbesondere ein Triangulationsverfahren zur Anwendung kommen kann, die Position der Augen im Raum bestimmt werden und es können dadurch die Position der Augen definierende Parameter in das Modell einfließen. Des Weiteren kann das Modell vereinfacht werden, indem die geometrischen Parameter durch Vorgabe von Annahmen hinsichtlich der Geometrie der Brillenfassung oder der Gläser und/oder durch Vorgabe von Annahmen oder Statistiken hinsichtlich Gesichts- oder Fassungsmerkmalen im Wertebereich eingeschränkt und/oder in ihrer Anzahl beschränkt oder reduziert werden.

Beispielsweise kann man von einer bezüglich einer Mittelebene symmetrischen Geometrie der Brillenfassung bzw. der Gläser ausgehen. Es kann auch eine zuvor bestimmte Mittellinie zwischen den Gläsern der Brille in den Bildern genutzt werden, um die Symmetrie des Modells sicherzustellen, z.B. indem die Information ins Modell einfließt, dass die Schnittgerade der als Ebenen approximierten Gläser auf diese Mittellinie projizieren muss. Alternativ können zum Beispiel Statistiken über Zentrierparameter vorliegen, aus denen Statistiken über die geometrischen Parameter des vorliegenden Modells abgeleitet werden können, z.B. können Statistiken über den Hornhautscheitelabstand helfen, die Positionierung der Fassung auf einen kleinen Bereich im Raum in einem bestimmten Abstand zu den Augen einzuschränken. Ebenso können Statistiken über den Wertebereich von z.B. Fassungsscheibenwinkeln oder Vorneigungswinkeln helfen, den Wertebereich einzelner Parameter des Modells geeignet einzuschränken, sodass das Optimieren der Kostenfunktion vereinfacht wird, indem entweder nur über Parameter innerhalb eines bestimmten typischen Wertebereichs optimiert wird oder indem die Wahrscheinlichkeitsverteilung über den Parameterwertebereich direkt in die Optimierung mit einfließt (z.B. bei Markov-Chain-Monte-Carlo Verfahren).

Zudem kann das Modell eine Wahrscheinlichkeitsverteilung enthalten, die Wahrscheinlichkeiten für mögliche Werte der Parameter angibt. Liegt der Wahrscheinlichkeitswert für einen Parameter unter einer vorgegebenen Schwelle, so kann vorgesehen sein, diesen im Verfahren ermittelten Parameter zu verwerfen, um die Dimension des Modells, d.h. dessen Komplexität, zu verringern.

Vorzugsweise wird das erfindungsgemäße computerimplementierte Verfahren mit einer Vorrichtung durchgeführt, wie sie grundsätzlich im Anspruch 15 und im Detail in der folgenden Figurenbeschreibung beschrieben wird.

Die erfindungsgemäß ermittelte Repräsentation des Rands des Brillenglases oder der Repräsentation des Brillenfassungsrands wird vorteilhaft zur Bestimmung von Zentrierparametern herangezogen, wobei die solchermaßen bestimmten Zentrierparameter vorteilhaft zum Zentrieren eines Brillenglases in einer Brillenfassung und/oder zum Einschleifen eines Brillenglases in eine Brillenfassung herangezogen werden. Dabei wird in einem Verfahrensschritt das mindestens eine Brillenglas mit den bestimmten Zentrierparametern in der Brillenfassung zentriert oder es wird das mindestens eine Brillenglas basierend auf den bestimmten Zentrierparametern für eine Anordnung in der Brillenfassung eingeschliffen. Auf diese Weise können Brillengläser und Brillen hergestellt werden.

Im Folgenden wird die Erfindung anhand eines in der Zeichnung schematisch dargestellten Ausführungsbeispiels näher erläutert. Es zeigen:

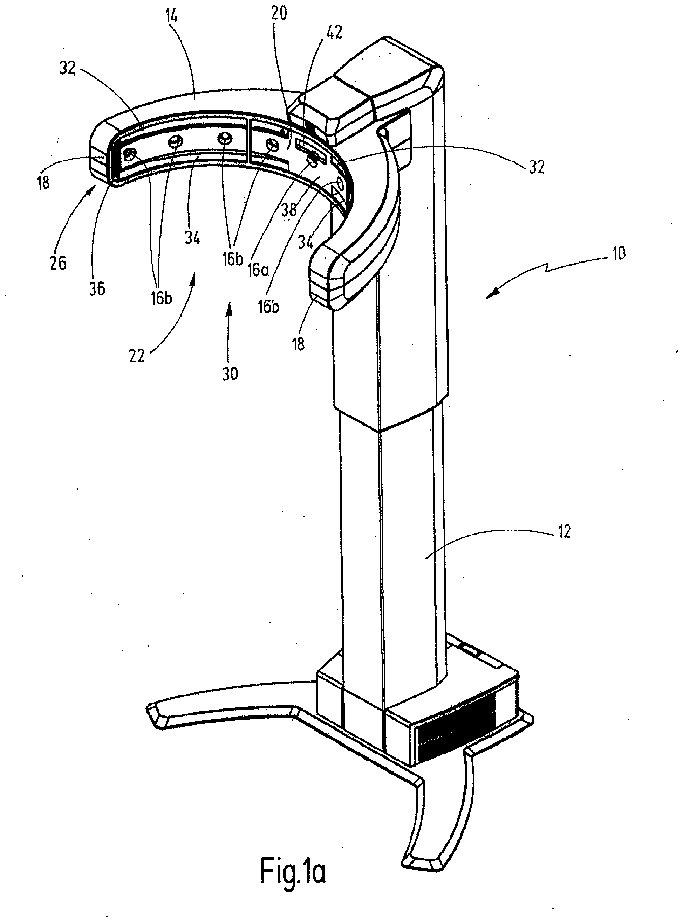

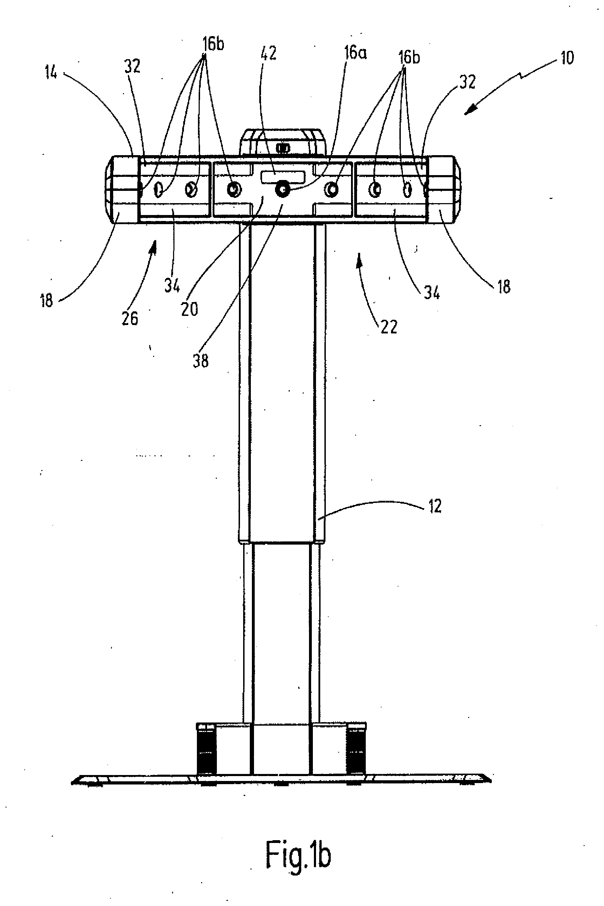

- Figur 1a, b: eine Vorrichtung zur Bestimmung von Zentrierparametern in perspektivischer Ansicht und in einer Ansicht von vorne;
- Figur 2a, b: Ansichten eines eine Brille tragendes Kopfes mit darauf projizierten genäherten Fassungskanten von vorne und von der Seite und
- Figur 3: ein Flussdiagramm zur Veranschaulichung eines Verfahrens gemäß einem bevorzugten Ausführungsbeispiel.

Die in der Zeichnung dargestellte Vorrichtung 10 dient der Bestimmung von Zentrierparametern für die Brillenanpassung. Sie weist eine Säule 12 auf, die höhenverstellbar einen starren Kameraträger 14 trägt, welcher wiederum eine Anzahl Kameras 16a, 16b trägt. Der Kameraträger 14 ist in Draufsicht näherungsweise kreisförmig gebogen und erstreckt sich zwischen zwei freien Enden 18, welche im Abstand zueinander angeordnet sind. Nach vorne, also zur Säule 12 hin, und zu den Seiten umschließt eine Innenfläche 20 des Kameraträgers 14 einen Innenraum 22, in dem sich bei der Aufnahme von Bildern durch die Kameras 16a, 16b der Kopf eines Probanden befindet. Die Innenfläche 20 ist in einer Richtung, die zwischen den freien Enden 18 verläuft, konkav gebogen und weist beispielsweise die Form eines Abschnitts einer Zylindermantelfläche auf, wobei der Zylinder eine kreisrunde oder ovale Grundfläche haben kann. Um den Kameraträger 14 bezüglich des Kopfs des Probanden auf der richtigen Höhe positionieren zu können, ist in der Säule 12 eine nicht näher dargestellte Hubeinrichtung angeordnet, mit der der Kameraträger 14 motorisch angetrieben auf und ab bewegt werden kann.

Alle Kameras 16a, 16b sind in einer sich zwischen den freien Enden 18 erstreckenden Kameraanordnung 26 angeordnet. Im vorliegenden Ausführungsbeispiel ist die Kameraanordnung 26 als Kamerareihe 26 ausgebildet, deren Kameras 16a, 16b sich alle in derselben Höhe befinden, wobei ihre optischen Achsen auf den Innenraum 22 gerichtet sind. Im vorliegenden Ausführungsbeispiel umfasst die Kamerareihe 26 eine in der Mitte des Kameraträgers 14 angeordnete Frontkamera 16a, deren optische Achse frontal auf das Gesicht des Probanden gerichtet ist, sowie acht paarweise symmetrisch bezüglich einer durch die optische Achse der Frontkamera 16a verlaufenden senkrechten Symmetrieebene angeordnete Seitenkameras 16b von denen jeweils vier von links und von rechts auf das Gesicht des Probanden gerichtet sind. Die Kameras 16a, 16b sind zudem kalibriert, so dass sie gleichzeitig kalibrierte Bilder des Probanden aufnehmen können. Die Kalibrierung umfasst die extrinsischen Eigenschaften wie die relative Ausrichtung ihrer optischen Achsen sowie die relative Anordnung zueinander im Raum, sowie ihre intrinsischen Eigenschaften, also die Eigenschaften der Kameras selbst, die definieren, wie ein Punkt im Raum, der sich im internen Koordinatensystem der jeweiligen Kamera befindet, auf die Koordinaten der Pixel des aufgenommenen Bildes abgebildet wird.

Der Kameraträger 14 umschließt den Innenraum 22 nur nach vorne, zur Säule 12 hin, und zu den Seiten, also links und rechts des Kopfes des Probanden. Nach oben, unten sowie zu einer Rückseite 30 hin ist er offen, wobei die freien Enden 18 zueinander einen Abstand von mindestens 25cm aufweisen, so dass sich der Proband bequem von der Rückseite aus nähern kann. Im gezeigten Ausführungsbeispiel beträgt der Abstand 70 bis 80cm.

Zur Ausleuchtung des Innenraums 22 ist eine Beleuchtungseinrichtung mit einer oberhalb der Kamerareihe 26 verlaufenden oberen Lichtleiste 32 sowie einer unterhalb der Kamerareihe 26 verlaufenden unteren Lichtleiste 34 vorgesehen, welche jeweils eine Vielzahl von LEDs als Leuchtmittel aufweisen. Die obere Lichtleiste 32 und die untere Lichtleiste 34 erstrecken sich jeweils durchgehend oder mit Unterbrechungen über eine Länge, die mindestens so groß ist wie die Länge der in Umfangsrichtung zwischen den freien Enden 18 gemessenen Länge der Kamerareihe 26. Diese entspricht einem Umfangswinkel von mindestens 160 Grad. Nahe den freien Enden 18 sind die obere Lichtleiste 32 und die untere Lichtleiste 34 jeweils mittels einer vertikal verlaufenden weiteren Lichtleiste 36 miteinander verbunden. Die Kamerareihe 26 wird somit vollständig durch mindestens eine Reihe LEDs umrahmt. Die Vorrichtung 10 weist zudem eine in der Zeichnung nicht näher dargestellte Steuer- oder Regeleinrichtung auf, mit der die von den LEDs abgestrahlte Lichtintensität abhängig von der durch die Kameras 16a, 16b detektierten Lichtintensität gesteuert oder geregelt werden kann. Die LEDs der Lichtleisten 32, 34, 36 sind dabei zu Sektoren zusammengefasst, deren abgestrahlte Lichtintensitäten getrennt voneinander gesteuert bzw. geregelt werden können. Zudem ist vorgesehen, dass auch die von den einzelnen LEDs abgestrahlten Lichtintensitäten mittels der Steuer- oder Regeleinrichtung getrennt voneinander gesteuert oder geregelt werden können.

Um den Probanden richtig im Innenraum 22 positionieren zu können, sind die beiden der Frontkamera 16a nächstgelegenen Seitenkameras 16b dazu eingerichtet, den Abstand des Kopfs des Probanden von der Mitte 38 des Kameraträgers 14 zu messen. Mittels einer nicht näher dargestellten Anzeigeeinheit wird dem Probanden angezeigt, ob er richtig steht oder nicht. Die Anzeigeeinheit weist mehrere unterschiedlich eingefärbte Lichtquellen auf, die in einer Reihe angeordnet sind. Die mittlere Lichtquelle leuchtet grün, wenn der Proband richtig steht. Ausgehend von der mittleren Lichtquelle gibt es in jeder Richtung in dieser Reihenfolge eine gelbe, eine orangene und eine rote Lichtquelle, die entsprechend der Farbe anzeigt, wenn der Proband ein wenig, deutlich oder viel zu weit von der Mitte 38 des Kameraträgers 14 entfernt bzw. ein wenig, deutlich oder viel zu nah zur Mitte 38 steht. Um bei der Bestimmung der Zentrierparameter sicherzustellen, dass die Blickrichtung des Probanden ins Unendliche gerichtet ist, ist eine am Kameraträger 14 angeordnete Fixationseinrichtung 42 vorgesehen, die ein Fixationsmuster für den Probanden in Form eines Specklemusters erzeugt. Das Fixationsmuster ist etwas höher angeordnet als die Frontkamera 16a, so dass der Proband über diese hinwegblickt. Damit kann sein Gesicht im größtmöglichen Umfang aufgenommen werden.

Die Vorrichtung 10 eignet sich insbesondere auch zur Herstellung eines Avatars des Kopfs des Probanden, welcher zur Bestimmung der Zentrierparameter herangezogen werden kann. Zum diesem Zweck werden durch die Kameras 16a, 16b kalibrierte Bilder des Kopfs des Probanden ohne Brille bzw. Brillenfassung aufgenommen. Mittels eines geeigneten Prozesses zur geometrischen Positionsbestimmung wie beispielsweise Triangulation wird ein Tiefenprofil des Kopfes erstellt, das diesen näherungsweise sehr gut abbildet. Der Kopf wird durch eine Vielzahl von Punkten abgebildet, die mittels eines Netzmusters miteinander verbunden werden können oder aber als Punktwolke gespeichert werden können. Bei der anschließenden Bestimmung der Zentrierparameter kann der so ermittelte Avatar herangezogen werden, um Zentrierparameter zu bestimmen, die aufgrund der geometrischen Eigenschaften der Brille bzw. Brillenfassung, die der Proband trägt, nicht oder nur näherungsweise bestimmt werden können. Beispielsweise kann ein breiter Fassungsbügel das Auge in einer Seitenaufnahme soweit verdecken, dass der Hornhautscheitelabstand nicht oder nur sehr ungenau bestimmt werden kann. Zudem können gefärbte oder stark spiegelnde Gläser die Augen nicht oder nur sehr schlecht erkennen lassen. Um dem zu begegnen, wird auf die von den Kameras 16a, 16b aufgenommenen Bilder des die Brille oder Brillenfassung tragenden Probanden das Tiefenprofil des Avatars projiziert und die Zentrierparameter, die aufgrund der durch die Brille bzw. Brillenfassung eingeschränkten Sicht nur ungenügend bestimmt werden können, werden mittels der Bilddaten des Avatars bestimmt. Dabei kann eine Anpassung des Avatars auf die Bilder des die Brille bzw. Brillenfassung tragenden Probanden zur Minimierung von Abweichungen erfolgen.

Alternativ oder zusätzlich zur Herstellung des Avatars kann die Vorrichtung 10 wie folgt zur Durchführung eines computerimplementierten Verfahrens zur Bestimmung einer Repräsentation eines Brillenfassungsrands oder einer Repräsentation der Ränder der Gläser einer Brille verwendet werden.

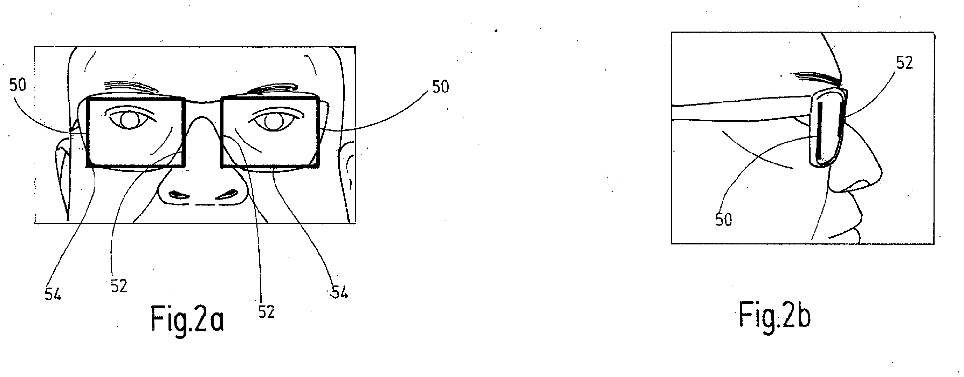

Zunächst werden mittels der Frontkamera 16a und mindestens einer der Seitenkameras 16b Bilder eines Probanden von vorn (Figur 2a) bzw. von der Seite (Figur 2b) aufgenommen, wobei der Proband eine Brille oder eine Brillenfassung trägt. Unter einer Brillenfassung wird dabei auch die Fassung einer randlosen Brille oder einer Teilrandbrille verstanden, die statt Brillengläsern Stützscheiben aufweist. Diese Bilder werden beim erfindungsgemäßen Verfahren zur Verfügung gestellt, ebenso wie ein dreidimensionales, auf geometrischen Parametern beruhendes Modell der Brillenfassung bzw. der Brille bereitgestellt wird. Das Modell wird mit beliebigen, aber sinnvoll erscheinenden Parametern initialisiert und es werden die Fassungsränder bzw. die Glasränder im Modell dreidimensional ermittelt. Die ermittelten Fassungs- oder Glasränder werden auf die aufgenommenen Bilder projiziert oder auf eine Darstellung, die in den Bildern die Wahrscheinlichkeit wiedergibt, mit der entsprechende Pixel zu einem Fassungs- oder Glasrand gehören. Die Parameter des Modells werden mittels einer Kostenfunktion bewertet und in einem anschließenden Optimierungsprozess, bei dem die Kostenfunktion optimiert wird, variiert, bis die Kostenfunktion ein Minimum annimmt. Dabei kann man vereinfachend bei dem Modell zunächst von einer Geometrie der Fassung oder der Brille ausgehen, wie sie in Figur 2a, 2b mittels temporaler und nasaler Kanten 50, 52 beschrieben ist. Näherungsweise kann durch jede temporale Kante 50 und die dazugehörende nasale Kante 52, wie in Figur 2a veranschaulicht, eine Glasebene gelegt werden, die im Modell das Brillenglas näherungsweise abbildet.

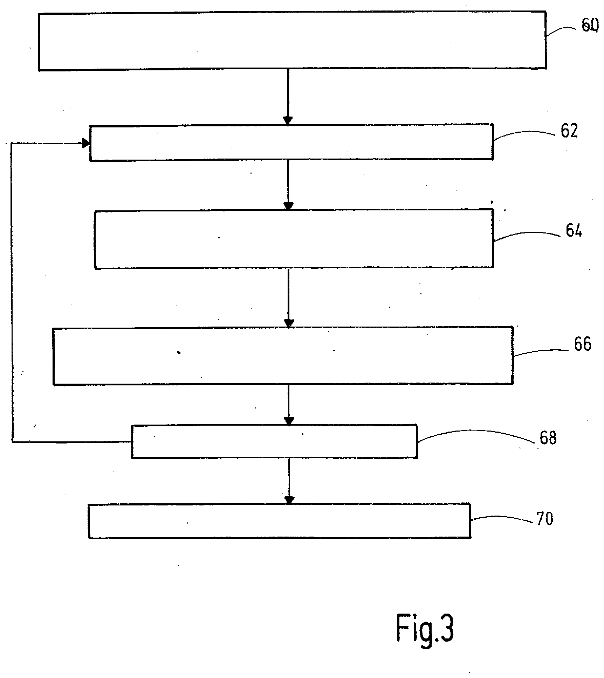

Bei Anwendung einer Markov-Chain-Monte-Carlo(MCMC)-Methode lässt sich der Ablauf des Verfahrens beispielsweise wie in Figur 3 veranschaulicht wiedergeben.

Als Modell werden zwei Ebenen gewählt, die symmetrisch zu einer Mittelebene der Fassung oder Brille sind. Außerdem sind zusätzliche Informationen wie die Glasboxen im Frontbild, Wahrscheinlichkeitskarten für die Kanten in den Seitenbildern basierend auf einem mit Hilfe von Beispieldaten gelernten Kantendetektor und 3D-Position der Augen gegeben (Schritt 60). Aus einer Menge von Trainingsdaten (z.B. aus einer Vielzahl von bekannten Brillenbestellungen) sind Zentrierparameter für eine größere Menge von Brillen bekannt. Aus diesen Trainingsdaten können Statistiken über die Zentrierparameter berechnet werden. Die Statistiken der Zentrierparameter können unter Beachtung der zusätzlichen geometrischen Vorgaben (beispielsweise Position der Augen, Symmetrie der Glasebenen) auf die Parameter des Modells übertragen werden. Dadurch ist es möglich, Parameter aus einer gegebenen Verteilung zu sampeln (Schritt 62) und die Wahrscheinlichkeit für diese Parameterkombination zu berechnen. (1. Schritt in der MCMC-Optimierung). Sind beispielsweise ein gesampeltes Ebenenpaar und die Glasboxen 54 (vgl. Figur 2a) im Frontbild gegeben, kann man die Glasboxen 54 auf die Ebenen projizieren und dadurch die Glasboxen 54 in dreidimensionalen Koordinaten erhalten. Die Kanten der dreidimensionalen Glasboxen 54 können nun in die Seitenbilder projiziert werden (Schritt 64). Die projizierten Kanten kann man dann mit den im Seitenbild tatsächlich detektierten Kanten vergleichen, z.B. mittels Maschinellem Lernen (Random Forest, Deep Learning etc.) und durch Abstandsmetriken (z.B. Chamfer Distance). Je besser die projizierten Kanten zu den detektierten passen, umso höher ist die Wahrscheinlichkeit, dass das gesampelte Modell tatsächlich der Fassung entspricht. Diesen Wert nennt man Score (2. Schritt MCMC-Optimierung, Schritt 66). Dieses Ergebnis kann verworfen werden (Schritt 68), beispielsweise dann, wenn die Wahrscheinlichkeit der gesampelten Parameter bzw. des gesampelten Modells und/oder der Score zu gering sind.

Der MCMC Algorithmus funktioniert so, dass eine große Anzahl Ebenen-Samples generiert wird, die die Wahrscheinlichkeitsdichtefunktion des Modells (basierend auf Parameterwahrscheinlichkeit und Score) simuliert. Besonders viele Samples treten dort auf, wo Parameterwahrscheinlichkeit und Score hoch sind. Um schließlich das beste Modell aus dieser Wahrscheinlichkeitsdichte für den aktuellen Datensatz zu erhalten, detektiert man die Modes dieser Verteilung, z.B. mit dem Meanshift Algorithmus (Schritt 70). Aus dem Ergebnis-Parametersatz lassen sich dann direkt die Zentrierparameter und die zum gewählten Modell passenden Kanten in den Seitenbildern ablesen.

Alternativ können auch andere Optimierungsverfahren genutzt werden. Hier kann z.B. die Wahrscheinlichkeitsverteilung über die Parameter zum Finden eines passenden Startwerts (z.B. Mittelwert oder Median der Verteilung) sowie passender Grenzwerte für die zu optimierenden Parameter verwendet werden.

## Patentansprüche

1. Computerimplementiertes Verfahren zur Bestimmung einer Repräsentation eines Brillenfassungsrands oder einer Repräsentation der Ränder der Gläser einer Brille, wobei mindestens zwei aus unterschiedlichen Blickrichtungen aufgenommene Bilder eines die Brillenfassung bzw. die Brille tragenden Kopfes bereitgestellt werden, wobei die mindestens zwei Bilder zueinander kalibriert sind, wobei die Kalibrierung die extrinsischen und intrinsischen Eigenschaften der die Bilder aufnehmenden Kamera oder Kameras umfasst, und wobei in jedem Bild Daten für zumindest Teile der Ränder der Brillenfassung bzw. der Ränder der Gläser bestimmt werden, **dadurch gekennzeichnet, dass** ein dreidimensionales, auf geometrischen Parametern beruhendes Modell der Brillenfassung bzw. der Brille bereitgestellt wird und dass die geometrischen Parameter zur Anpassung des Modells an die detektierten Ränder optimiert werden.

2. Computerimplementiertes Verfahren nach Anspruch 1, **dadurch gekennzeichnet, dass** die Form der Brillenfassung oder Brille und die Orientierung der Brille oder Brillenfassung im Raum definierende Parameter optimiert werden.

3. Computerimplementiertes Verfahren nach Anspruch 1 oder 2, **dadurch gekennzeichnet, dass** mindestens zwei gleichzeitig aus unterschiedlichen Blickrichtungen aufgenommene kalibrierte Bilder eines die Brillenfassung bzw. die Brille tragenden Kopfes bereitgestellt werden.

4. Computerimplementiertes Verfahren nach einem der vorangehenden Ansprüche, **dadurch gekennzeichnet, dass** die Bilder aus Pixeln bestehen und dass jedem Pixel ein die Wahrscheinlichkeit, dass das Pixel einen Teil der Ränder der Brillenfassung bzw. der Gläser enthält, abbildender Wert zugeordnet wird.

5. Computerimplementiertes Verfahren nach Anspruch 4, **dadurch gekennzeichnet, dass** eine die Wahrscheinlichkeitswerte abbildende Wahrscheinlichkeitskarte mittels Machine Learning berechnet wird.

6. Computerimplementiertes Verfahren nach einem der vorangehenden Ansprüche, **dadurch gekennzeichnet, dass** die geometrischen Parameter des Modells nasale und/oder temporale Kanten der Brillenfassung bzw. der Gläser näherungsweise definierende Geraden beschreiben.

7. Computerimplementiertes Verfahren nach einem der vorangehenden Ansprüche, **dadurch gekennzeichnet, dass** das Modell jeden Fassungsrand oder jedes Glas näherungsweise als in einer Ebene liegend definiert oder als in einer Fläche n-ter Ordnung liegend oder als Linearkombination von Flächen n-ter Ordnung dargestellt werden kann, insbesondere als Linearkombination, die mindestens eine Ebene und/oder mindestens ein Paraboloid umfasst oder einen Spline darstellt.

8. Computerimplementiertes Verfahren nach einem der vorangehenden Ansprüche, **dadurch gekennzeichnet, dass** aus dem Modell Darstellungen der Brillenfassung bzw. der Gläser generiert und auf die aufgenommenen Bilder projiziert werden.

9. Computerprogramm mit Programmcode zur Durchführung aller Verfahrensschritte nach einem der Ansprüche 1 bis 8, wenn das Computerprogramm in einem Computer geladen und in einem Computer ausgeführt wird.

10. Verwendung einer Vorrichtung (10) zur Durchführung eines computerimplementierten Verfahrens nach einem der Ansprüche 1 bis 8, wobei die Vorrichtung (10) einen Kameraträger (14) aufweist, welcher einen nach oben, nach unten und zu einer Rückseite (30) hin offenen Innenraum (22) teilweise umschließt und mindestens drei Kameras (16a, 16b) trägt, die zwischen zwei freien Enden (18) des Kameraträgers (14) angeordnet und auf den Innenraum (22) gerichtet sind, wobei der Kameraträger (14) zur Beleuchtung des Innenraums (22) eine Beleuchtungseinrichtung (32, 34, 36) aufweist.

11. Vorrichtung zur Bestimmung einer Repräsentation eines Brillenfassungsrands oder einer Repräsentation der Ränder der Gläser einer Brille mit einer ersten Kamera zur Aufnahme eines ersten Bilds aus einer ersten Blickrichtung, mit mindestens einer zur ersten Kamera kalibrierten zweiten Kamera zur Aufnahme eines zweiten Bilds aus einer von der ersten Blickrichtung verschiedenen zweiten Blickrichtung, wobei die Kalibrierung die extrinsischen und intrinsischen Eigenschaften der Kameras umfasst, und mit einem Computer, welcher einen Speicher umfasst, in dem ein Computerprogramm gespeichert ist, das einen Programmcode zur Durchführung der folgenden Verfahrensschritte aufweist:
i. Bestimmung von Daten für zumindest Teile der Ränder der Brillenfassung bzw. der Ränder der Gläser in jedem Bild
ii. Bereitstellung von mindestens zwei aus unterschiedlichen Blickrichtungen aufgenommenen kalibrierten Bildern eines die Brillenfassung bzw. die Brille tragenden Kopfes
iii. Bereitstellung eines auf geometrischen Parametern beruhenden Modells der Brillenfassung bzw. der Brille
iv. Optimierung der geometrischen Parameter zur Anpassung des Modells an die detektierten Ränder,
wobei der Computer einen Prozessor umfasst, um das im Speicher gespeicherte Computerprogramm auszuführen.

12. Verfahren zum Zentrieren mindestens eines Brillenglases in einer Brillenfassung, **dadurch gekennzeichnet, dass** in einem ersten Verfahrensschritt zu dem Brillenglas Zentrierparameter bestimmt werden, wobei das Bestimmen der Zentrierparameter das Ermitteln der Repräsentation des Rands des Brillenglases oder der Repräsentation des Brillenfassungsrands mit einem Verfahren nach einem der Ansprüche 1 bis 8 umfasst, und dass in einem zweiten Verfahrensschritt das mindestens eine Brillenglas mit den im ersten Verfahrensschritt bestimmten Zentrierparametern in der Brillenfassung zentriert wird.

13. Verfahren zum Einschleifen mindestens eines Brillenglases in eine Brillenfassung, **dadurch gekennzeichnet, dass** in einem ersten Verfahrensschritt zu dem Brillenglas Zentrierparameter bestimmt werden, wobei das Bestimmen der Zentrierparameter das Ermitteln der Repräsentation des Rands des Brillenglases oder der Repräsentation des Brillenfassungsrands mit einem Verfahren nach einem der Ansprüche 1 bis 8 umfasst, und dass in einem zweiten Verfahrensschritt das mindestens eine Brillenglas basierend auf den im ersten Verfahrensschritt bestimmten Zentrierparametern für eine Anordnung in der Brillenfassung eingeschliffen wird

14. Verfahren zum Herstellen eines Brillenglases, **gekennzeichnet durch** den Verfahrensschritt Einschleifen des Brillenglases in eine Brillenfassung nach dem Verfahren gemäß Anspruch 13.

15. Verfahren zum Herstellen einer Brille, **dadurch gekennzeichnet, dass** ein Verfahren nach einem der Ansprüche 12 bis 14 verwendet wird.

## Claims

1. Computer-implemented method for determining a representation of a spectacle frame edge or a representation of the edges of the lenses of a pair of spectacles, wherein at least two images, recorded from different directions of view, of a head wearing the spectacle frame or the spectacles are provided, wherein the at least two images are calibrated with respect to one another, wherein the calibration comprises the extrinsic and intrinsic properties of the camera or cameras recording the images, and wherein the data for at least parts of the edges of the spectacle frame or of the lenses are determined in each image, **characterized in that** a three-dimensional model, based on geometric parameters, of the spectacle frame or of the spectacles is provided and **in that** the geometric parameters for fitting the model to the detected edges are optimized.

2. Computer-implemented method according to Claim 1, **characterized in that** parameters that define the form of the spectacle frame or spectacles and the orientation of the spectacles or spectacle frame in space are optimized.

3. Computer-implemented method according to Claim 1 or 2, **characterized in that** at least two calibrated images, recorded simultaneously from different directions of view, of a head wearing the spectacle frame or the spectacles are provided.

4. Computer-implemented method according to any one of the preceding claims, **characterized in that** the images consist of pixels and **in that** a value mapping the probability of a pixel containing a part of the edges of the spectacle frame or of the lenses is assigned to each pixel.

5. Computer-implemented method according to Claim 4, **characterized in that** a probability map mapping probability values is calculated by way of machine learning.

6. Computer-implemented method according to any one of the preceding claims, **characterized in that** the geometric parameters of the model describe straight lines approximately defining nasal and/or temporal edges of the spectacle frame or of the lenses.

7. Computer-implemented method according to any one of the preceding claims, **characterized in that** the model defines each frame edge or each lens as lying approximately in a plane or said model can be represented as lying in a surface of order n or as a linear combination of surfaces of order n, in particular as a linear combination comprising at least one plane and/or at least one paraboloid or representing a spline.

8. Computer-implemented method according to any one of the preceding claims, **characterized in that** representations of the spectacle frame or of the lenses are generated from the model and projected onto the recorded images.

9. Computer program with program code for carrying out all of the method steps according to any one of Claims 1 to 8, when the computer program is loaded onto a computer and/or executed on a computer.

10. Use of an apparatus (10) for carrying out a computer-implemented method according to any one of Claims 1 to 8, wherein the apparatus (10) comprises a camera carrier (14), which partly encloses an interior (22) that is open to the top, to the bottom and to a rear side (30) and which carries at least three cameras (16a, 16b) which are arranged between two free ends (18) of the camera carrier (14) and directed onto the interior (22), wherein the camera carrier (14) has an illumination device (32, 34, 36) for illuminating the interior (22).

11. Apparatus for determining a representation of a spectacle frame edge or a representation of the edges of the lenses of a pair of spectacles, comprising a first camera for recording a first image from a first direction of view, comprising at least a second camera, calibrated with respect to the first camera, for recording a second image from a second direction of view that differs from the first direction of view, wherein the calibration comprises the extrinsic and intrinsic properties of the cameras, and comprising a computer comprising a memory in which a computer program is stored, said computer program comprising program code for carrying out the following method steps:
i. determining data in each image for at least parts of the edges of the spectacle frame or of the edges of the lenses,
ii. providing at least two calibrated images, recorded from different directions of view, of a head wearing the spectacle frame or the spectacles,
iii. providing a model, based on geometric parameters, of the spectacle frame or of the spectacles,
iv. optimizing the geometric parameters for the purposes of fitting the model to the detected edges,
wherein the computer comprises a processor for executing the computer program stored in the memory.

12. Method for centring at least one spectacle lens in a spectacle frame, **characterized in that** centration parameters are determined for the spectacle lens in a first method step, wherein the determination of the centration parameters comprises the ascertainment of the representation of the edge of the spectacle lens or the representation of the spectacle frame edge using a method according to any one of Claims 1 to 8, and **in that** the at least one spectacle lens with the centration parameters determined in the first method step is centred in the spectacle frame in a second method step.

13. Method for grinding at least one spectacle lens into a spectacle frame, **characterized in that** centration parameters are determined for the spectacle lens in a first method step, wherein the determination of the centration parameters comprises the ascertainment of the representation of the edge of the spectacle lens or the representation of the spectacle frame edge using a method according to any one of Claims 1 to 8, and **in that**, in a second method step, the at least one spectacle lens is ground for an arrangement in the spectacle frame on the basis of the centration parameters determined in the first method step.

14. Method for producing a spectacle lens, **characterized by** the method step of grinding the spectacle lens into a spectacle frame according to the method according to Claim 13.

15. Method for producing a pair of spectacles, **characterized in that** use is made of a method according to any one of Claims 12 to 14.

## Revendications

1. Procédé mis en œuvre par ordinateur pour déterminer une représentation d'un bord de monture de lunettes ou une représentation des bords des verres d'une paire de lunettes,
dans lequel au moins deux images d'une tête portant la monture de lunettes ou la paire de lunettes, prises à partir de différentes directions d'observation, sont fournies, dans lequel lesdites au moins deux images sont étalonnées l'une par rapport à l'autre, dans lequel l'étalonnage comprend les propriétés extrinsèques et intrinsèques de la caméra ou des caméras prenant les images, et dans lequel des données sont déterminées dans chaque image pour au moins certaines parties des bords de la monture de lunettes ou des bords des verres, **caractérisé en ce qu'**un modèle tridimensionnel de la monture de lunettes ou de la paire de lunettes, qui est fonction de paramètres géométriques, est fourni et **en ce que** les paramètres géométriques sont optimisés pour adapter le modèle aux bords détectés.

2. Procédé mis en œuvre par ordinateur selon la revendication 1, **caractérisé en ce que** les paramètres définissant la forme de la monture de lunettes ou de la paire de lunettes et l'orientation de la paire de lunettes ou de la monture de lunettes dans l'espace sont optimisés.

3. Procédé mis en œuvre par ordinateur selon la revendication 1 ou 2, **caractérisé en ce qu'**au moins deux images étalonnées, prises simultanément à partir de différentes directions d'observation, d'une tête portant la monture de lunettes ou la paire de lunettes sont fournies.

4. Procédé mis en œuvre par ordinateur selon l'une des revendications précédentes, **caractérisé en ce que** les images sont constituées de pixels et **en ce qu'**à chaque pixel est associée une valeur représentant la probabilité que le pixel contienne une partie des bords de la monture de lunettes ou des verres.

5. Procédé mis en œuvre par ordinateur selon la revendication 4, **caractérisé en ce qu'**une carte de probabilité représentant les valeurs de probabilité est calculée au moyen d'un apprentissage machine.

6. Procédé mis en œuvre par ordinateur selon l'une des revendications précédentes, **caractérisé en ce que** les paramètres géométriques du modèle décrivent des droites définissant approximativement des bords nasaux et/ou temporaux de la monture de lunettes ou des verres.

7. Procédé mis en œuvre par ordinateur selon l'une des revendications précédentes, **caractérisé en ce que** le modèle définit approximativement chaque bord de monture ou chaque verre comme se situant dans un plan ou peut être représenté comme se situant dans une surface d'ordre n ou comme une combinaison linéaire de surfaces d'ordre n, en particulier comme une combinaison linéaire qui comprend au moins un plan et/ou au moins un paraboloïde ou qui représente une spline.

8. Procédé mis en œuvre par ordinateur selon l'une des revendications précédentes, **caractérisé en ce que** des représentations de la monture de lunettes ou des verres sont générées à partir du modèle et projetées sur les images prises.

9. Programme informatique comportant un code de programme permettant d'exécuter toutes les étapes du procédé selon l'une des revendications 1 à 8 lorsque le programme informatique est chargé dans un ordinateur et exécuté dans un ordinateur.

10. Utilisation d'un dispositif (10) pour exécuter un procédé mis en œuvre par ordinateur selon l'une des revendications 1 à 8, dans lequel le dispositif (10) comporte un support de caméra (14) qui entoure partiellement un espace intérieur (22) ouvert vers le haut, vers le bas et vers un côté arrière (30) et porte au moins trois caméras (16a, 16b) disposées entre deux extrémités libres (18) du support de caméra (14) et dirigées vers l'espace intérieur (22), dans lequel le support de caméra (14) comporte un dispositif d'éclairage (32, 34, 36) pour éclairer l'espace intérieur (22).

11. Dispositif pour déterminer une représentation d'un bord de monture de lunettes ou une représentation des bords des verres d'une paire de lunettes comportant une première caméra pour prendre une première image à partir d'une première direction d'observation, comportant au moins une seconde caméra étalonnée par rapport à la première caméra pour prendre une seconde image à partir d'une seconde direction d'observation différente de la première direction d'observation, dans lequel l'étalonnage comprend les propriétés extrinsèques et intrinsèques des caméras, et comportant un ordinateur comprenant une mémoire dans laquelle est stocké un programme informatique qui comprend un code de programme pour exécuter les étapes de procédé suivantes :
i. détermination de données pour au moins certaines parties des bords de la monture de lunettes ou des bords des verres dans chaque image,
ii. fourniture d'au moins deux images étalonnées d'une tête portant la monture de lunettes ou la paire de lunettes, prises à partir de différentes directions d'observation,
iii. fourniture d'un modèle de la monture de lunettes ou de la paire de lunettes qui repose sur des paramètres géométriques,
iv. optimisation des paramètres géométriques pour adapter le modèle aux bords détectés,
dans lequel l'ordinateur comprend un processeur pour l'exécution du programme informatique stocké dans la mémoire.

12. Procédé de centrage d'au moins un verre de lunettes dans une monture de lunettes, **caractérisé en ce que**, lors d'une première étape du procédé, des paramètres de centrage du verre de lunettes sont déterminés, dans lequel la détermination des paramètres de centrage comprend la détermination de la représentation du bord du verre de lunettes ou de la représentation du bord de la monture de lunettes par un procédé selon l'une des revendications 1 à 8, et **en ce que**, lors d'une seconde étape du procédé, ledit au moins un verre de lunettes est centré dans la monture de lunettes en utilisant les paramètres de centrage déterminés lors de la première étape du procédé.

13. Procédé de meulage d'au moins un verre de lunettes pour l'insérer dans une monture de lunettes, **caractérisé en ce que**, lors d'une première étape du procédé, des paramètres de centrage sont déterminés pour le verre de lunettes, dans lequel la détermination des paramètres de centrage comprend la détermination de la représentation du bord du verre de lunettes ou de la représentation du bord de la monture de lunettes par un procédé selon l'une des revendications 1 à 8, et **en ce que**, lors d'une seconde étape du procédé, ledit au moins un verre de lunettes est meulé pour être disposé dans la monture de lunettes en fonction des paramètres de centrage déterminés lors de la première étape du procédé.

14. Procédé de fabrication d'un verre de lunettes, **caractérisé par** l'étape de procédé consistant à meuler le verre de lunettes pour l'insérer dans une monture de lunettes conformément au procédé selon la revendication 13.

15. Procédé de fabrication d'une paire de lunettes, **caractérisé en ce qu'**un procédé selon l'une des revendications 12 à 14 est utilisé.
